# EUROPÄISCHE PATENTANMELDUNG

(11) **EP 0 598 675 A1**
(43) Veröffentlichungstag der Anmeldung: **25.05.1994**
(21) Anmeldenummer: 93610061.9
(22) Anmeldetag: 15.11.1993
(51) Int. Cl.: G02C 1/00, G02C 7/02

(54) **Linsensystem zur Verbesserung von Optik für Schwachsichtigkeit**

(30) Priorität: 18.11.1992 DK 1384/92
(71) Anmelder: Langer, Peter Johann, DK-4242 Boeslunde (DK)
(72) Erfinder: Langer, Peter Johann, DK-4242 Boeslunde (DK)

(57) **Zusammenfassung**

Ein Problem für sehschwache Menschen ist, dass man bei Anwendung von einer Fernglasbrille sowohl aussehen- wie orientierungsmässig gehemmt ist.

Diesem kann abgeholfen werden mittels der L %/+ E - Methode, bestehend aus Plus- und Minusglas in Brillenglas bzw. Kontaktlinse. Die Starke muss numerisch diegleiche sein, jedoch mit entgegengesetzten Vorzeichen. Die Methode wirkt wie ein Fernglas, jedoch mit dem Vorteil, dass man den "Tunneleffekt" vermeidet, indem man, wie bei Anwendung von einer gewöhnlichen Brille, sich frei nach allen Seiten orientieren kann, Fehlschätzungen auf kurzen Abständen vermeidet, und eine Sehverbesserung erreicht in einem Grad, wie es mit den üblichen bekannten Mitteln bisher nict erreichbar gewesen ist.

## Beschreibung

Die Erfindung besteht aus einem Linsensystem zur Verbesserung von Optik für Schwachsichtigkeit, bestehend aus einer Kombination aus Brillengläsern und Kontaktlinsen, dessen Starke untereinander numerisch gleich, aber mit entgegengesetzten Vorzeichen, angepasst wird, so dass die negative Kontaktlinse wie das Okular und das positive Brillenglas wie das Objektiv in einem Fernglas wirken.

Es ist schon bekannt, dass man Brillen und Kontaktlinsen kombinieren kann. Aus der US-Patentschrift 2,164,801 ist ein teleskopisches Linsensystem bekannt, ohne besondere Angabe vom Verhältnis zwischen den Stärken in bzw. Brillenglas und Kontaktlinse. Ausserdem ist es aus der US-Patentschrift 3,027,803 bekannt, dass man Brillengläser und Kontaktlinsen wie ein Galilei-Teleskop anwenden kann, während darauf hingewiesen wird, dass die Kontaktlinse einen hohen Dioptrienwert haben muss, wozu die Stärke des Brillenglases individuell angepasst wird.

Den Nachteilen, die von einer Fernglasbrille bekannt sind, kann abgeholfen werden durch ein Linsensystem, das daran besonders ist, dass die Stärke in Brillenglas und Kontaktlinse numerisch dieselbe ist, aber mit entgegengesetzten Vorzeichen. Aufgrund des Abstandes zwischen Brillenglas und Kontaktlinse wird das System wie ein Fernglas wirken.

Der Vorteil dieses Systems ist, dass man eine Sichtverbesserung erreicht wie mit einer Fernglasbrille, aber ohne deren kosmetisch entstellende Wirkung. Ausserdem wird die Orientierungsfähigkeit verbessert, wenn man auf kurzem Abstand Gegenstände fassen oder treffen soll. Im Gegensatz zu einer Fernglasbrille kann dieses System überall und mit uneingeschränktem Blickfeld nach allen Richtungen getragen werden.

Im Verhältnis zu den beiden US-Patentschriften gibt es folgende Differenzen: In der US-Patentschrift 2,164,801 wird nicht aufgeklärt, inwieweit die Sehkraft verbessert werden kann. In der US-Patentschrift 3,027,803 wird in einem Beispiel erklärt, dass eine Sichtverbesserung von 2% mal bei einer Kombination von %60 Dioptrien in der Kontaktlinse und bei einem Abstand von 25 mm zwischen Kontaktlinse und Brillenglas erreicht werden kann, was bedeutet, dass man seine Brille auf unnormale Weise auf der Nase tragen muss. In dieser Patentschrift kann dokumentiert werden, dass der Bewerber bei Anwendung der Kombination %16 in der Kontaktlinse und +16 im Brillenglas eine Sichtverbesserung von 6/60 bis 6/24 erreicht hat, bei normaler Position der Brille.

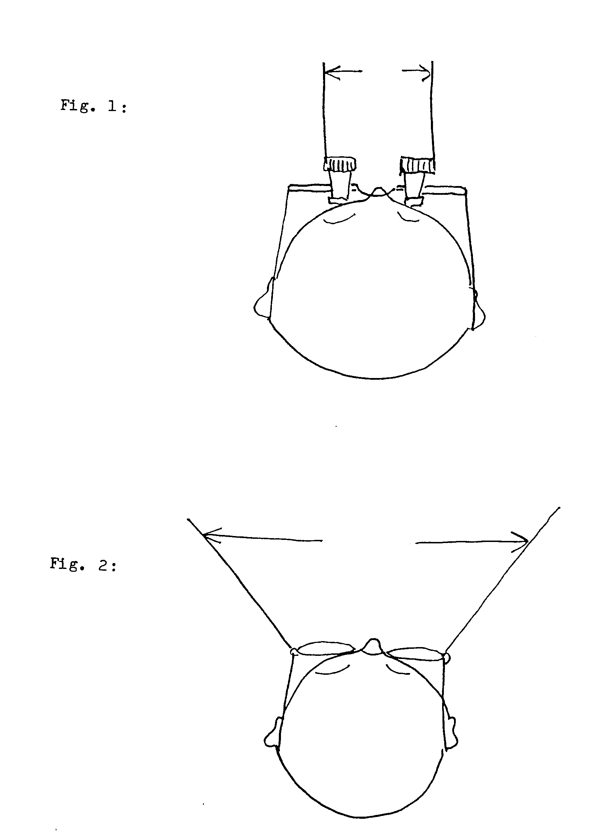

Fig. 1 zeigt das Sichtfeld bei Anwendung einer Fernglasbrille, und Fig. 2 zeigt das Sichtfeld bei der Anwendung von L %/+ E.

## Patentansprüche

1. Ein Linsensystem zur Verbesserung von Optik für Schwachsichtigkeit, bestehend aus einer Kontaktlinse, auf der Hornhaut des Auges angebracht, und einem im Abstand hiervon angebrachten Brillenglas, in einer normalen Brillenfassung montiert, da die Kontaktlinse und das Brillenglas das Okular bzw. das Objektiv in einer "Fernglasbrille" ausmachen, dadurch gekennzeichnet, dass die Stärke in Brillenglas und Kontaktlinse diegleiche ist, jedoch mit entgegengesetztem Vorzeichen.
